# EUROPEAN PATENT APPLICATION

(11) **EP 3 611 411 A1**
(43) Date of publication of application: **19.02.2020**
(21) Application number: 18784819.7
(22) Date of filing: 27.03.2018
(51) Int. Cl.: F16K 27/00, B29C 45/26, B29C 45/36, F16K 27/02

(54) **VALVE HOUSING, VALVE, AND METHOD FOR MANUFACTURING VALVE HOUSING**

(30) Priority: 14.04.2017 JP 2017080891
(71) Applicant: Bridgestone Corporation, Tokyo 104-8340 (JP)
(72) Inventor: HARADA Tsuyoshi, Tokyo 104-8340 (JP)
(74) Representative: Oxley, Robin John George
(86) International application number: PCT/JP2018/012286
(87) International publication number: WO 2018/190115

(57) **Abstract**

Provided are a valve housing, a valve, and a method of manufacturing the valve housing, which have a simple structure and can ensure sufficient strength while suppressing pressure loss. The valve housing (10) includes a main body part (11) including an internal passage (16) in which a valve body (20) is to be arranged, and two connection parts (12, 13) extending in opposite directions across the main body part (11), and two flow passages (14,15) formed inside each of the connection parts (12,13) communicate with the internal passage (16). The valve housing (10) is made of resin, and one central axis (O1) of the flow passages (14,15) and the other central axis (O2) of the two flow passages (14,15) are offset. The valve (1) has the valve housing (10). The valve housing (10) can be manufactured by injecting resin into a cavity formed by a mold and pins.

## Description

### TECHNICAL FIELD

The present disclosure relates to a valve housing, a valve, and a method of manufacturing the valve housing.

### BACKGROUND

In conventional valves, there is a valve capable of adjusting a flow rate by a coma packing arranged in a valve housing (valve body) moving up and down by turning the handle (for example, see Patent Document 1).

### CITATION LIST

### Patent Literature

PTL 1: Japanese Patent Laid-Open No. 4-157266

### SUMMARY

### (Technical Problem)

In such a conventional valve, the valve housing is generally made of metal. If the valve housing is made of metal, the durability of the valve housing and thus the valve can be enhanced. Further, if the valve housing is made of metal, for example, the wall thickness of a flow passage can be reduced to reduce the weight of the valve housing and thus the valve.

However, if the valve housing is made of metal, the valve housing (valve) becomes expensive. Further, in order to reduce the weight of the valve housing (valve), there is a limit to reduce the weight of the valve housing (valve), even if the thickness of the valve housing is reduced.

Therefore, if the valve housing is made of resin, the structure becomes simple in comparison with the case where the valve housing is made of metal, and further weight reduction can be achieved at low cost.

However, if the valve housing is made of resin, the strength is lower than that of metal, and there is room for improvement in the durability of the valve housing (valve). In addition, in order to improve the durability, simply increasing the thickness of the valve housing also causes a new problem that pressure loss increases due to the narrowing of the flow passage.

An object of the present disclosure is to provide a valve housing, a valve, and a method of manufacturing the valve housing, which have a simple structure and can ensure sufficient strength while suppressing pressure loss.

### (Solution to Problem)

The valve housing according to the present disclosure is a valve housing including a main body part including an internal passage in which a valve body is to be arranged, and two connection parts extending in opposite directions across the main body part, two flow passages formed inside each of the two connection parts communicating with the internal passage, wherein the valve housing is made of resin, and one central axis of the two flow passages and the other central axis of the two flow passages are offset. In the present specification, the wording "the two central axes 'are offset'" means that the two central axes are not on the same straight line.

The valve housing according to the present disclosure has a simple structure and can ensure sufficient strength while suppressing pressure loss.

In the valve housing according to the present disclosure, it is preferable that an offset amount between the one central axis of the two flow passages and the other central axis of the two flow passages is 7 mm to 11 mm. In this specification, the "offset amount" between two central axes refers to the shortest distance between the two central axes that are offset.

In this case, the pressure loss can be further suppressed.

The valve housing according to the present disclosure is an injection molded product, and it is preferable that a weld line is arranged at a position that avoids a direction in which the two flow passages are directed.

In this case, the strength of the valve housing as an injection molded product can be improved.

In the valve housing according to the present disclosure, it is preferable that one of the two connection parts is arranged at a position offset along the internal passage of the main body part with respect to the other of the two connection parts, together with the central axis of one flow passage of the two connection parts.

In this case, it is possible to further reduce the weight of the valve housing.

In the valve housing according to the present disclosure, it is preferable that at least one of the two connection parts includes a male screw portion.

In this case, a joint having a valve function can be manufactured from resin.

In the valve housing according to the present disclosure, it is preferable that the flow passage has an inner diameter that is the same toward the internal passage or an inner diameter that tapers toward the internal passage.

In this case, the valve housing is easy to manufacture.

The valve according to the present disclosure has any of the valve housings described above.

The valve according to the present disclosure has a simple structure and can ensure the sufficient strength while suppressing pressure loss.

A method of manufacturing a valve housing according to the present disclosure includes
a first step of forming a cavity using a mold, and two pins arranged at a position offset in the mold together with the mold, in which the cavity forms an outer surface shape and an inner surface shape of the valve housing having two connection parts extending in opposite directions across a main body part; and
a second step of injecting resin into the cavity formed by the molds and the pins, after the first step is finished.

According to the method of manufacturing the valve housing of the present disclosure, it is possible to manufacture the valve housing that has a simple structure and can ensure the sufficient strength while suppressing pressure loss.

### (Advantageous Effect)

According to the present disclosure, it is possible to provide a valve housing, a valve, and a method of manufacturing the valve housing, which have a simple structure and can ensure sufficient strength while suppressing pressure loss.

### BRIEF DESCRIPTION OF THE DRAWINGS

In the accompanying drawings:
FIG. 1 is a perspective view of a valve according to an embodiment of the present disclosure, illustrating an obliquely upper side of the valve from one connection part side of a valve housing;
FIG. 2 is a perspective view illustrating an obliquely lower side of the valve of FIG. 1 from the other connection part side of the valve housing;
FIG. 3 is a plan view illustrating the valve of FIG. 1 from above;
FIG. 4 is a cross-sectional view taken along the line A-A of the valve in FIG. 3;
FIG. 5 is a schematic cross-sectional view for explaining a method of manufacturing a valve housing according to an embodiment of the present disclosure; and
FIG. 6 is a sectional view of a valve as a comparative example, corresponding to an A-A section of FIG. 3.

### DETAILED DESCRIPTION

Hereinafter, a valve housing, a valve, and a method of manufacturing the valve housing according to an embodiment of the present disclosure will be described with reference to the drawings.

### [Valve housing, valve]

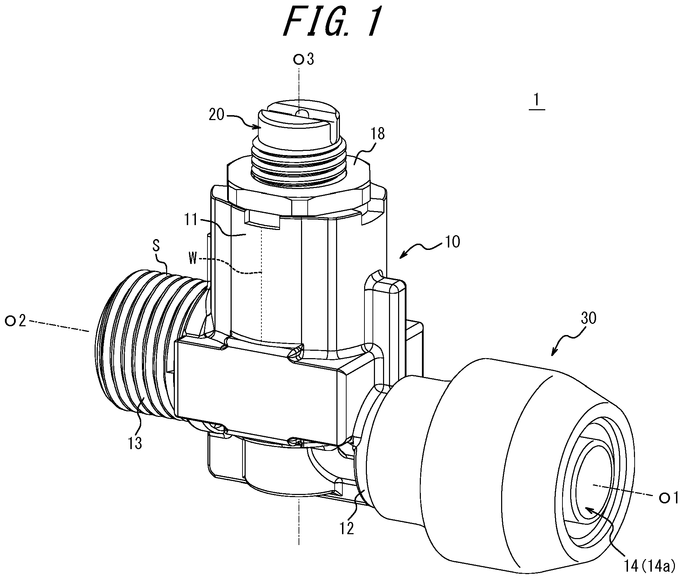

Reference sign 1 in FIG. 1 to FIG. 4 denotes the valve according to an embodiment of the present disclosure. In the present embodiment, a valve 1 has a valve housing 10 according to the embodiment of the present disclosure. The valve housing 10 is made of resin. Examples of the resin include thermoplastic resins, and specific examples include reinforced plastics. As the reinforced plastic, for example, reinforced plastic such as talc resin, fiber reinforced plastic including carbon fiber or glass fiber can be adopted. Further, as the resin, polyphenylene sulfide (PPS) resin can also be adopted.

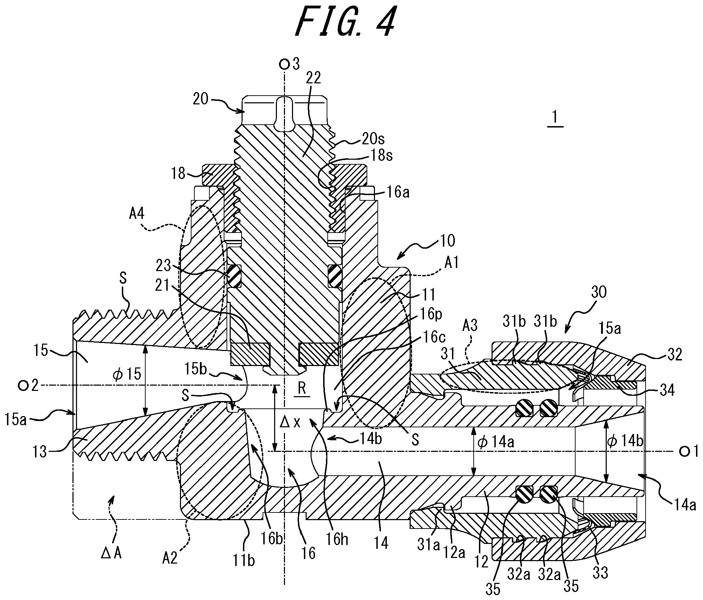

As illustrated in FIG. 4, the valve housing 10 includes a main body part 11 including an internal passage 16 in which a valve body 20 is to be arranged, and two connection parts 12 and 13 extending in opposite directions across the main body part 11. A flow passage 14 is formed inside one of the two connection parts 12 and 13. In the present embodiment, the flow passage 14 is formed inside the connection part 12. The flow passage 14 forms an opening 14a at the tip of the connection part 12. A flow passage 15 is formed inside the other of the two connection parts 12 and 13. The flow passage 15 forms an opening 15a at the tip of the connection part 13. In the present embodiment, the flow passage 15 is formed inside the connection part 13.

Two flow passage 14 and flow passage 15 formed inside the two connection parts 12 and 13 communicate with the internal passage 16. That is, the two flow passage 14 and flow passage 15 are in communication with each other through the internal passage 16. The internal passage 16 forms an opening 16a at the upper end of the main body part 11. In the present embodiment, the internal passage 16 is constituted of a small flow passage area part 16b in which the opening 16a is formed and a large flow passage area part 16c that communicates with the small flow passage area part 16b. The small flow passage area part 16b and the large flow passage area part 16c communicate with each other through a communication port 16h. In the present embodiment, as illustrated in FIG. 1, the main body part 11 is a solid member that is basically filled with the contents of the portion excluding the flow passages 14 and 15 and the internal passage 16. In the present embodiment, as illustrated in FIG. 1, the small flow passage area part 16b and the large flow passage area part 16c form an annular step S inside the main body part 11, and the small flow passage area part 16b opened inside the annular step S forms the communication port 16h. In addition, in the present embodiment, as illustrated in FIG. 1, an annular edge 16p of the communication port 16h protrudes from the annular step S toward the large flow passage area part 16c, and constitutes a valve seat on which the valve body 20 is seated. That is, in the present embodiment, the valve seat on which the valve body 20 is seated is constituted of a solid portion of the main body part 11 in which the annular step S is formed, as illustrated in FIG. 1. In the present embodiment, the flow passage 14 communicates with the small flow passage area part 16b. The flow passage 14 communicates with the small flow passage area part 16b through a communication port 14b. Moreover, in this embodiment, the flow passage 15 communicates with the large flow passage area part 16c. The flow passage 15 communicates with the large flow passage area part 16c through a communication port 15b.

In the present embodiment, a valve body cover 18 through which the valve body 20 passes is attached to the opening 16a of the internal passage 16. The valve body 20 is slid in the internal passage 16 to form a variable flow passage R in the internal passage 16. In the present embodiment, the valve body 20 has a shaft 22 to which a packing 21 is attached. Moreover, in this embodiment, the shaft 22 is constituted of a spindle having a male screw part 20S. The shaft 22 is liquid-tightly sealed in the internal passage 16 via an O-ring 23. In the present embodiment, the valve body 20 slides in the large flow passage area part 16c. In the present embodiment, the large flow passage area part 16c is formed as an internal passage having substantially the same diameter as the outer diameter of the valve body 20. In the present embodiment, the outer diameter of the valve body 20 is the outer diameter of the packing 21 attached to the shaft 22. In addition, in the present embodiment, the inner peripheral surface of the large flow passage area part 16c constitutes the sliding surface of the valve body 20. In the present embodiment, the inner peripheral surface of the large flow passage area part 16c does not have a portion that protrudes radially outward from the sliding surface of the valve body 20. Further, in the present embodiment, the valve body cover 18 is constituted as a spindle cover. Specifically, the valve body cover 18 has a female screw part 18S that is screwed into the male screw part 20S of the shaft 22 inside thereof.

In the present embodiment, when the valve body 20 is moved down by turning the shaft 22 and the packing 21 of the valve body 20 comes into contact with the annular edge 16p of the communication port 16h, the communication port 16h is closed. This makes it impossible for fluid to flow between the flow passage 14 and the flow passage 15. Further, in this embodiment, when the valve body 20 is moved up by turning the shaft 22 and the packing 21 of the valve body 20 is separated from the annular edge 16p of the communication port 16h, a variable flow passage R that changes in volume as the valve body 20 rises is formed between the valve body 20 and the communication port 16h. Thereby, between the flow passage 14 and the flow passage 15, the fluid having a flow rate corresponding to the rise of the valve body 20 is allowed to flow.

As described above, in the valve housing 10, one connection part 12 and the other connection part 13 are extended in opposite directions across the main body part 11, and the flow passage 14 of the connection part 12 and the flow passage 15 of the connection part 13 are communicated with the internal passage 16 of the main body part 11.

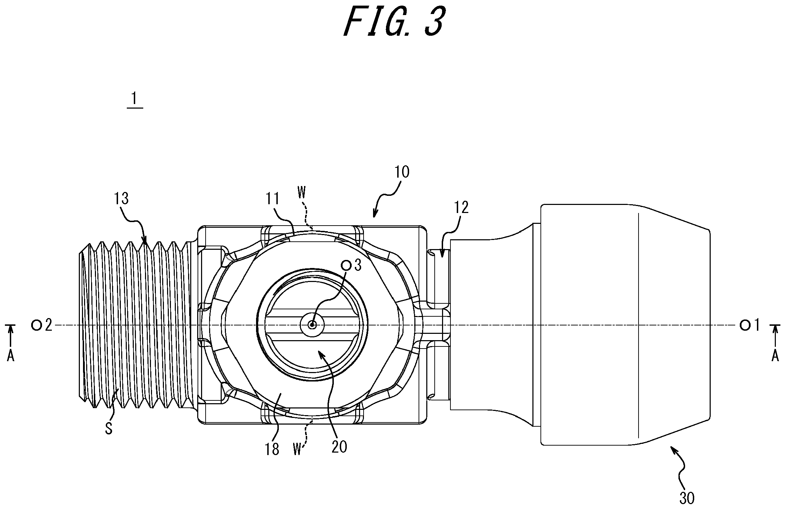

In the valve housing 10, one central axis O1 of the two flow passage 14 and flow passage 15 and the other central axis O2 of the two flow passage 14 and flow passage 15 are offset. In this specification, two central axes O1 and O2 being "offset" indicates that the two central axes O1 and O2 are not on the same straight line. Preferably, the two central axes O1 and O2 are not on the same straight line and do not intersect, that is, the two central axes O1 and O2 are parallel. In the present embodiment, there is a plane (in FIG. 3, a plane extending perpendicular to the paper surface including the central axes O1 and O2) including two central axes (one central axis and the other central axis) (that is, the two central axes are on the same plane), and the two central axes are offset. Specifically, in the present embodiment, as illustrated in FIG. 3, the two central axes O1 and O2 are included on the same plane together with a central axis O3 of the internal passage 16, and constitute the same plane as illustrated in FIG. 4. In addition, in the present embodiment, as illustrated in FIG. 4, the two central axes O1 and O2 are offset in the same plane, and extend in the direction opposite to each other so as to be orthogonal to the central axis O3 of the internal passage 16. Furthermore, in this embodiment, as illustrated in FIG. 4, the communication port 14b of the flow passage 14 and the communication port 15b of the flow passage 15 are offset to positions that do not overlap each other, in the direction of the central axis O3 of the internal passage 16, together with the two central axes O1 and O2.

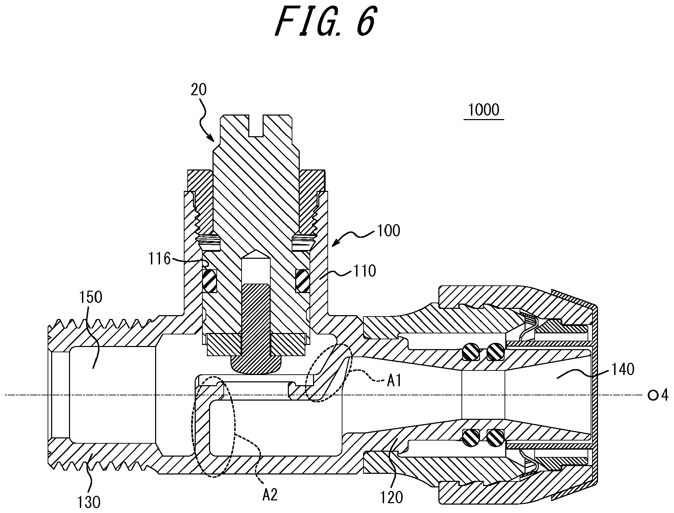

On the other hand, FIG. 6 illustrates a metal valve 1000 as a comparative example. Reference sign 100 denotes a metal valve housing as a comparative example. A valve housing 100 also has a main body part 110 having an internal passage 116 having the valve body 20 arranged, and two connection parts 120 and 130 extending in opposite directions across the main body part 110. A flow passage 140 is formed inside the connection part 120. In addition, a flow passage 150 is formed inside a connection part 130.

However, in the valve housing 100, the central axis of the flow passage 140 and the central axis of the flow passage 150 are on the same axis O4. For this reason, in the valve housing 100, the flow passage 140 and the flow passage 150 detour (meander) and have a complicated structure so that a communication port is formed in the wall leaving a thin wall from each other. Further, along with this, the wall thickness of the flow passage 140 and the flow passage 150 is reduced. For this reason, the valve housing 100 as a comparative example is difficult to be made of resin.

On the other hand, as illustrated in FIG. 4, in the valve housing 10 according to the present embodiment, the central axis O1 of one flow passage 14 is arranged in an offset state with respect to the central axis O2 of the other flow passage 15, and these flow passage 14 and flow passage 15 are communicated with the internal passage 16. According to the valve housing 10 having such a configuration, the valve housing 10 and thus the valve 1 has a simple structure having the flow passages (14, R, 15) simplified. As a result, as will be described later, the valve housing 10 can be produced by injection molding. Further, according to the valve housing 10 having such a configuration, as illustrated in FIG. 4, the two central axes, the central axis O1 of the flow passages 14 and the central axis O2 of the flow passage 15 are offset, thereby the two flow passages 14 and 15 can be directly connected to each of the small flow passage area part 16b and the large flow passage area part 16c, respectively, with the communication port 16h interposed therebetween. For this reason, the two flow passages 14 and 15 do not need to detour (meander) so that the communication port 16h is formed in the wall leaving a thin wall. As is clear from comparison between the region A1 and the region A2 in FIG. 4, and the corresponding region A1 and the region A2 in FIG. 6, the valve housing 10 and thus the valve 1 can increase the thickness of the valve housing 10 without narrowing the flow passage 14 and the flow passage 15, so that sufficient strength can be ensured while suppressing pressure loss.

Therefore, according to the valve housing 10 and the valve 1 according to this embodiment, a structure is simple, and the sufficient strength can be ensured while suppressing pressure loss. In particular, as illustrated in FIG. 3 and FIG. 4, in the present embodiment, the two central axes O1 and O2 constitute the same plane, and are offset in the same plane, as illustrated in FIG. 4. In this case, the two flow passages 14 and 15 do not have to be detoured (meandered) so that the communication port 16h is formed in the wall leaving a thin wall, and in addition, the two flow passages 14 and 15 extend along the central axes O1 and O2 in opposite directions, so that the pressure loss when the fluid flows through the flow passages (14, R, and 15) can be further reduced.

In the valve housing according to the present disclosure, it is preferable that an offset amount ΔX of the central axis O1 of one of the two flow passage 14 and flow passage 15 (in this embodiment, "flow passage 14") and the central axis O2 of the other of the two flow passages 14 and 15 (in this embodiment, "flow passage 15") is in the range of ΔX=7 mm to 11 mm (7 mm≤ΔX≤11 mm). This offset amount ΔX indicates the shortest distance between the two central axes that are offset. In the present embodiment, when the offset amount ΔX is less than 7 mm, the necessary thickness cannot be ensured. Conversely, when the offset amount ΔX exceeds 11 mm, the pressure loss increases. Therefore, in this embodiment, the offset amount ΔX is set to 7 mm≤ΔX≤11 mm. The offset amount ΔX can be determined by the flow of fluid from the flow passage 14 to the flow passage 15 through the internal passage 16 or the flow of fluid from the flow passage 15 to the flow passage 14 through the internal passage 16. In this case, according to the valve housing 10 and thus the valve 1, the fluid smoothly flows between the flow passage 14 and the flow passage 15 through the variable flow passage R, so that the pressure loss can be further suppressed.

In the present embodiment, the valve housing 10 is an injection molded product. As illustrated in FIG. 1 to FIG. 3, the weld line W is preferably arranged at a position that avoids the direction in which the two flow passages 14 and 15 are directed. In this case, since the weld line W is arranged at a position deviated from the fluid flow, the fluid flow does not directly affect the weld line W. Therefore, the strength of the valve housing 10 as an injection molded product, and thus the valve 1 can be improved. Referring to FIG. 3, it is preferable that the weld line W is arranged at a position that avoids on the axial lines of the central axis O1 of the flow passage 14 and the central axis O2 of the flow passage 15. In other words, it is preferable to arrange the weld line W at a portion, of the contour shape of the valve housing 10, excluding the cross-sectional contour portion of the valve housing 10 formed by the A-A cross section (cross section including the central axis O1, the central axis O2, and the central axis O3) in FIG. 3. As a specific example, as illustrated in FIG. 3, the weld line W is arranged on the side surface of the main body part 11 of the valve housing 10 along the extending direction of the internal passage 16 of the main body part 11.

In the valve housing 10, it is preferable that one of the two connection parts 12 and 13 is arranged at a position offset along the internal passage 16 of the main body part 11, with respect to the other of the two connection parts 12 and 13, together with the central axis of one flow passage of the two connection parts. As illustrated in FIG. 4 or the like, in this embodiment, the connection part 12 is arranged at a position offset along the internal passage 16 of the main body part 11 with respect to the connection part 13, together with the central axis O1 of the flow passage 14 of the connection part 12, and forms a step with respect to a lower end 11b of the main body part 11. In this case, the portion on the lower end 11b side of the main body part 11 of the connection part 12 is thinned by the amount by which the connection part 12 is offset upward from the lower end 11b of the main body part 11, together with the flow passage 14 of the connection part 12, by the broken line region ΔA in FIG. 4. Therefore, the valve housing 10 and thus the valve 1 can be further reduced in weight, while providing the required strength of the valve housing and thus the required strength of the valve. In addition, the amount of resin used in the valve housing 10 can be reduced by the amount of thinning of the connection part 12, by the broken line region ΔA in FIG. 4. Further, ability to reduce the amount of resin usage can lead the valve housing 10 and thus the valve 1 to be manufactured at a lower cost.

Further, in the valve housing according to the present disclosure, it is preferable that at least one of the two connection parts 12 and 13 includes a male screw portion S. In this case, the male screw portion S functions as a joint element. That is, as a joint having a valve function, the valve housing 10 and thus the valve 1 can be manufactured from resin. In the present embodiment, the male screw portion S is formed in the connection part 12. The male screw portion S of the connection part 12 can be used, for example, to connect to a metal pipe such as a flexible pipe piped under a washstand, and parts for connecting to the metal pipe or the like are not necessary.

Further, in the valve housing 10, it is preferable that the flow passage 14 of the connection part 12 and the flow passage 15 of the connection part 13 have the same inner diameter toward the internal passage 16 or the inner diameter that tapers toward the internal passage 16. In this case, the flow passage 14 of the connection part 12 and the flow passage 15 of the connection part 13 can be manufactured by molding such as injection molding, thereby the valve housing 10 is easy to manufacture. In the present embodiment, the flow passage 14 has a straight shape (inner diameter (ϕ14a) with the same diameter and a shape (inner diameter (ϕ14b) that tapers toward the tip. In particular, when the flow passage has a straight shape with the same diameter, the pressure loss can be further suppressed. In the present embodiment, the inner diameter (ϕ14a of the flow passage 14 is in the range of (ϕ14a=6 mm to 8 mm (6 mm≤ϕ14a≤8 mm). Within this range, it is preferable that the offset amount ΔX is in the range of ΔX=7 mm to 11 mm as described above. In this case, the thickness of each of the region A1 and region A2 can be 3 mm or more, without reducing the inner diameters of the flow passages 14 and 15, and the durability of a valve seat portion can be ensured.

On the other hand, in the present embodiment, another joint element 30 is provided at the connection part 12 of the valve housing 10. The joint element 30 can be used to connect to a resin pipe such as a polybutene pipe or a crosslinked polyethylene pipe.

The joint element 30 has a main body cover 31 attached to the outside of the connection part 12 of the valve housing 10. In the present embodiment, the main body cover 31 is formed of a transparent resin material. The main body cover 31 is prevented from coming off the outer peripheral surface of the connection part 12 of the valve housing 10 by the annular protrusion 31a provided on the inner peripheral surface being hooked on the annular protrusion 12a provided on the outer peripheral surface of the connection part 12 of the valve housing 10. In the present embodiment, as illustrated in FIG. 1, the thickness of the region A1 and the region A2 of the main body part 11 is larger than the thickness of the main body cover 31 illustrated in the region A3, respectively. As a specific example, as illustrated in FIG. 1, the thickness in the extending direction of the central axis O1 (O2) and the thickness in the extending direction of the central axis O3 in the region A1 and the region A2 are thicker than the thickness of the body cover 31 in the extending direction of the central axis O3 in the region A3, respectively. Further, in the present embodiment, as illustrated in FIG. 1, the thickness of the region A1 and the region A2 of the main body part 11 is larger than the thickness of the portion that forms the opening 16a of the internal passage 16 indicated by the region A4, respectively. As a specific example, as illustrated in FIG. 1, the thickness in the extending direction of the central axis O1 (O2) and the thickness in the extending direction of the central axis O3 in the region A1 and region A2 are thicker than the thickness in the extending direction of the central axis O2 in the portion indicated by the region A4, respectively.

The joint element 30 has a cylindrical cap 32. The cap 32 is made of a resin material. The cap 32 is prevented from coming off from the main body cover 31 by locking projections 31b formed on the outer peripheral surface of the main body cover 31 being caught in locking grooves 32a.

Further, the joint element 30 has a locking claw 33. The locking claw 33 is made of a metal such as stainless steel. The locking claw 33 is arranged between the main body cover 31 and the cap 32. As illustrated in FIG. 4, the locking claw 33 forms an annular gap for inserting a pipe or the like between the locking claw 33 and the connection part 12 of the valve housing 10. The locking claw 33 is hooked on the resin pipe or the like inserted between the locking claw 33 and the connection part 12 of the valve housing 10 and prevents the resin pipe or the like from coming off.

Further, the joint element 30 has a release ring 34. The release ring 34 is made of a resin material. The release ring 34 is slidably held along the connection part 12 of the valve housing 10 with respect to the inner peripheral surface of the cap 32. The release ring 34 forms an annular gap for inserting a pipe or the like between the release ring 34 and the connection part 12 of the valve housing 10. The release ring 34 presses the locking claw 33 by being pushed along the connection part 12 of the valve housing 10 and can release the locking claw 33 from being caught on the resin pipe or the like.

Further, the joint element 30 has an O-ring 35 attached to the outer peripheral surface of the connection part 12 of the valve housing 10. The O-ring 35 is made of an elastic material. The O-ring 35 hermetically or liquid-tightly seals the inner peripheral surface of the resin pipe or the like connected between the connection part 12 of the valve housing 10 and the main body cover 31, the locking claw 33 and the release ring 34.

Thus, in this embodiment, the connection part 13 of the valve housing 10 includes a male screw portion S, and the other joint element 30 is provided in the connection part 12 of the valve housing 10. According to the present disclosure, the male screw portion S can be formed in at least any one of the connection part 12 and the connection part 13. Further, according to the present disclosure, the joint element 30 can be provided in at least any one of the connection part 12 and the connection part 13. That is, the connection part 12 and the connection part 13 of the valve housing 10 can be constituted of only the male screw portion S or only the joint element 30.

### [Manufacturing method of valve housing]

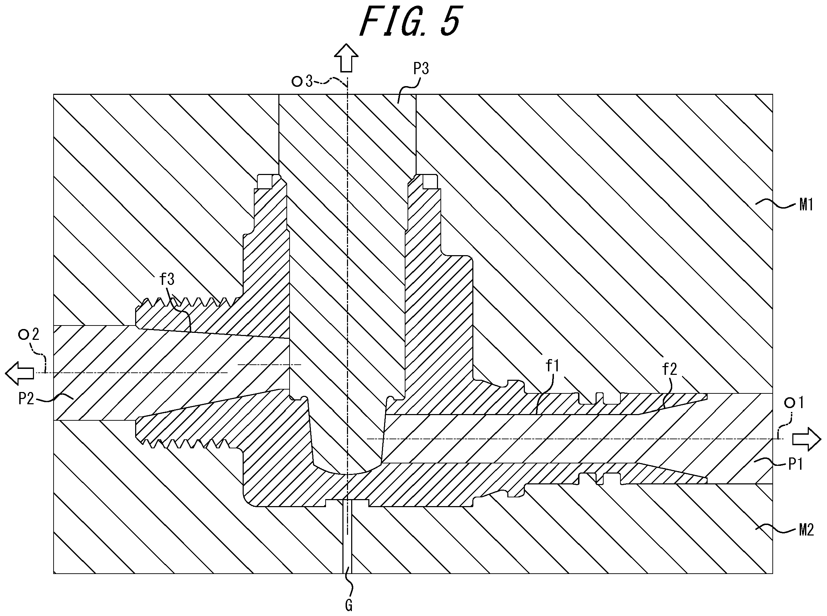

The valve housing 10 according to the present embodiment can be manufactured by the following method. Hereinafter, with reference to FIG. 5, a method of manufacturing the valve housing according to the present embodiment will be described. Portions that are substantially the same as those in FIGS. 1 to 4 have the same reference signs, and a description thereof is omitted.

In the method of manufacturing the valve housing according to the present embodiment, injection molding of the valve housing 10 is performed using a mold M1, a mold M2, and pins P1 to P3.

The mold M1 is an upper mold. In the present embodiment, the mold M1 functions as a movable mold. The mold M2 is a lower mold. In the present embodiment, the mold M2 functions as a fixed mold. In the present embodiment, a cavity formed inside the mold M1 and the mold M2 forms the external shape of the valve housing 10. A split mold of the mold is not limited to the two split molds of the upper mold and the lower mold. The number of split molds and the like can be changed as appropriate.

In the present embodiment, a pin P1 is a molding pin that forms the flow passage 14 of the connection part 12. A pin P2 is a molding pin that forms the flow passage 15 of the connection part 13. Further, a pin P3 is a molding pin that forms the internal passage 16. In this embodiment, molding surface portions f1 and f2 of the pin P1 forming the flow passage 14 have a straight shape with the same diameter (inner diameter ϕ14a) and a shape that tapers toward the tip (inner diameter ϕ14b). For example, the molding surface portion f1 of the pin P1 can have a shape that tapers toward the tip. Similarly, a molding surface portion f3 of the pin P2 forming the flow passage 15 has a shape (inner diameter ϕ15) that tapers toward the tip. For example, the molding surface portion f3 of the pin P2 can have a straight shape (inner diameter ϕ15). That is, in the present embodiment, the pins P1 to P3 may have any shape that can be removed from the mold M1 and the mold M2 in the direction indicated by the arrow in FIG. 5.

### [First step]

In the method of manufacturing the valve housing according to the present embodiment, first, the first step is performed in which the cavity is formed by using the mold, and the two pins arranged in an position offset in the mold together with the mold, in which the cavity forms an outer surface shape and an inner surface shape of the valve housing having the two connection parts extending in opposite directions across the main body part.

As illustrated in FIG. 5, in the present embodiment, one cavity for injection molding the valve housing 10 is formed, using the mold M1 and the mold M2, the two pins P1 and P2 arranged at positions offset in the mold M1 and the mold M2 together with the mold M1 and the mold M2, and one pin P3 arranged at a position orthogonal to the two pins P1 and P2. That is, the cavity is formed inside the mold M1 and the mold M2 together with the pin PI, pin P2, and pin P3. The cavity forms the outer surface shape of the valve housing 10 having the two connection parts 12 and 13 extending in opposite directions across the main body part 11, and at the same time, forms the inner surface shape of the two flow passages 14 and 15 to be formed inside each of the two connection parts 12 and 13, and forms the inner surface shape of the internal passage 16 to be formed inside the main body part 11.

### [Second step]

Next, in the method of manufacturing the valve housing according to the present embodiment, a second step is performed after the first step is finished. In the second step, resin is injected into the cavity formed by the molds and the pins.

In the present embodiment, after the first step is finished, the above-described resin is injected into the cavity formed with the pins P1 to P3 inside the mold M1 and the mold M2. As illustrated in FIG. 5, in this embodiment, the resin is injected into the cavity through a gate G formed in the mold M2. Thereby, the valve housing 10 can be injection molded.

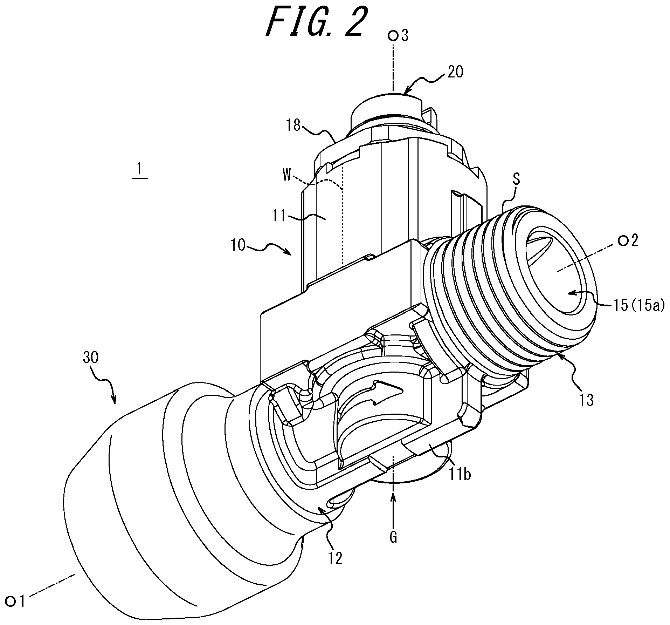

In particular, in the present embodiment, as indicated by the arrow G in FIG. 2 and FIG. 5, the gate G injecting resin is arranged at a position of the lower end 11b of the valve housing 10, through which the central axis O3 of the internal passage 16 passes. The gate G injecting the resin can be arranged at two positions on the lower end 11b of the valve housing 10, at intervals on the central axis O1 of the flow passage 14 and the central axis O2 of the flow passage 15. Alternatively, the gate G can be arranged at one position shifted to either the left or right from the central axis O1 of the flow passage 14 and the central axis O2 of the flow passage 15. In these cases, the weld line W is arranged at a position excluding the axial lines of the central axis O1 of the flow passage 14 and the central axis O2 of the flow passage 15.

### [Third step]

Further, the method of manufacturing the valve housing according to the present embodiment performs a third step after the second step is finished. In the third step, the molds and the pins are removed.

In this embodiment, any of the pins P1 to P3 has the same outer diameter toward the center of the cavity or an outer diameter that tapers toward the center of the cavity. Therefore, in the method of manufacturing the valve housing according to the present embodiment, any of the pins P1 to P3 can be easily removed from the valve housing 10 after the injection molding.

Thus, according to the method of manufacturing the valve housing according to the present embodiment, using at least two pins arranged at positions offset in the mold makes it possible to manufacture the valve housing 10 that has a simple structure and can ensure the sufficient strength while suppressing pressure loss.

### REFERENCE SIGNS LIST

1 Valve
10 Valve housing
11 Main body part
12 Connection part (one of the two connection parts)
13 Connection part (the other of the two connection parts)
14 Flow passage (one of the two flow passages)
15 Flow passage (the other of the two flow passages)
16 Internal passage
20 Valve body
G Gate
M1 Mold (movable mold)
M2 Mold (fixed mold)
O1 Central axis of flow passage (one central axis of two flow passages)
O2 Central axis of flow passage (the other central axis of two flow passages)
O3 Central axis of internal passage
P1 Pin (molding pin of the flow passage 14)
P2 Pin (molding pin of the flow passage 15)
P3 Pin (molding pin of the internal passage 16)
R Variable flow passage
S Male screw portion
W Weld line

## Claims

1. A valve housing comprising a main body part including an internal passage in which a valve body is to be arranged, and two connection parts extending in opposite directions across the main body part, two flow passages formed inside each of the two connection parts communicating with the internal passage, wherein
the valve housing is made of resin, and
one central axis of the two flow passages and an other central axis of the two flow passages are offset.

2. The valve housing according to claim 1, wherein an offset amount between the one central axis of the two flow passages and the other central axis of the two flow passages is 7 mm to 11 mm.

3. The valve housing according to claim 1 or 2, wherein the valve housing is an injection molded product, and a weld line is arranged at a position that avoids a direction in which the two flow passages are directed.

4. The valve housing according to any one of claims 1 to 3, wherein one of the two connection parts is arranged at a position offset along the internal passage of the main body part with respect to an other of the two connection parts, together with the central axis of one flow passage of the two connection parts.

5. The valve housing according to any one of claims 1 to 4, wherein at least one of the two connection parts includes a male screw portion.

6. The valve housing according to any one of claims 1 to 5, wherein the flow passage has an inner diameter that is the same toward the internal passage or an inner diameter that tapers toward the internal passage.

7. The valve comprising the valve housing according to any one of claims 1 to 6.

8. A method of manufacturing a valve housing, comprising:
a first step of forming a cavity using a mold and two pins, the two pins being arranged at a position offset in the mold together with the mold, the cavity forming an outer surface shape and an inner surface shape of the valve housing having two connection parts extending in opposite directions across a main body part; and
a second step of injecting resin into the cavity formed by the mold and the pins, after the first step is finished.
